# EUROPEAN PATENT APPLICATION

(11) **EP 3 789 869 A1**
(43) Date of publication of application: **10.03.2021**
(21) Application number: 20194934.4
(22) Date of filing: 07.09.2020
(51) Int. Cl.: G06F 3/16, G06F 3/12

(54) **IMAGE FORMING APPARATUS AND METHOD FOR SETTING THE SAME**

(30) Priority: 05.09.2019 JP 2019162015
(71) Applicant: KONICA MINOLTA, INC., Tokyo 100-7015 (JP)
(72) Inventor: HABA, Shoko, Tokyo, 100-7015 (JP); SUGIMOTO, Hiroaki, Tokyo, 100-7015 (JP)
(74) Representative: Henkel & Partner mbB

(57) **Abstract**

A multi-functional peripheral (MFP) (100) includes an operation unit (20), a voice input unit (10), a voice identification unit (11), a voice controller (12), a memory device (40), and a system controller (30) that controls an image forming apparatus according to an operation received by the operation unit (20) or the voice controller (12). If setting information for an item determined to be a sensitive item matches identification information stored in the memory device (40), the system controller (30) requests a user to change the setting information.

## Description

The entire disclosure of Japanese Patent Application No. 2019-162015, filed on September 5, 2019, is incorporated herein by reference in its entirety.

### Background

### Technological Field

The present disclosure relates to an image forming apparatus and a method for setting the same, and, more particularly, to an image forming apparatus and a method for setting the same, which can prevent information leakage.

### Description of the Related Art

In recent years, an apparatus provided with a voice controller is developed with the growth of voice recognition technologies. However, when the user uses the voice control to set sensitive information, such as a password, to the apparatus, the sensitive information may be leaked to people around the user. Thus, Japanese Laid-Open Patent Publication No. 2007-79852 discloses an apparatus provided with a voice controller which disables the voice control and switches to another operation unit for a user to set sensitive information to the apparatus.

Moreover, Japanese Laid-Open Patent Publication No. 2015-80120 discloses an apparatus in which when a user attempts to operate the apparatus with voice control with respect to a setting item that is set as sensitive information, the sensitive information stored in the apparatus is translated from the current set value into another set value, a translation table of the current set value and the translated set value is displayed on the apparatus, and the user uses the translated set value to operate the apparatus with voice control.

### Summary

The technology disclosed in Japanese Laid-Open Patent Publication No. 2007-79852 fails to prevent the sensitive information from being leaked when the user accidentally input the sensitive information vocally after the operation unit has switched to an operation unit, other than the voice control. The technology disclosed in Japanese Laid-Open Patent Publication No. 2015-80120 fails to prevent the sensitive information from being leaked when the user accidentally input the set value (the sensitive information) vocally before the translation, rather than the translated set value.

To achieve at least one of the abovementioned objects, according to an aspect of the present disclosure, image forming apparatus operable with voice control reflecting one aspect of the present disclosure comprises: an operation unit that receives an operation through a user's action; a voice input unit that receives input of voice; a voice identification unit that identifies the voice received by the voice input unit; a voice controller that receives an operation through a user's voice, in accordance with identification information identified by the voice identification unit, the identification information being included in the voice; a storage that stores the identification information identified by the voice identification unit; and a controller that controls the image forming apparatus, in accordance with the operation received by the operation unit or the voice controller, wherein the controller: determines whether items to be set in the image forming apparatus include a sensitive item which includes sensitive information; determines whether setting information, received by the operation unit for the item that is determined to be the sensitive item, matches the identification information stored in the storage; and requests the user to change the setting information when the setting information matches the identification information.

According to another embodiment, an image forming apparatus operable with voice control, includes: an operation unit that receives an operation through a user's action; a voice input unit that receives input of voice; a voice identification unit that identifies the voice received by the voice input unit; a voice controller that receives an operation through a user's voice, in accordance with identification information identified by the voice identification unit, the identification information being included in the voice; a storage that stores the identification information identified by the voice identification unit; and a controller that controls the image forming apparatus, in accordance with the operation received by the operation unit or the voice controller, wherein the controller: determines whether items to be set in the image forming apparatus include a sensitive item which includes sensitive information; when the operation unit receives setting information for the item determined to be the sensitive item, authenticates the setting information whether the setting information matches pre-set information of the sensitive item; determines whether the authenticated setting information matches the identification information stored in the storage; and requests the user to change the pre-set information of the sensitive item when the setting information matches the identification information.

According to still another embodiment, a method for setting an image forming apparatus, the image forming apparatus including: an operation unit that receives an operation through a user's action; a voice input unit that receives input of voice; a voice identification unit that identifies the voice received by the voice input unit; a voice controller that receives an operation through a user's voice, in accordance with identification information identified by the voice identification unit, the identification information being included in the voice; a storage that stores the identification information identified by the voice identification unit; and a controller that controls the image forming apparatus in accordance with the operation received by the operation unit or the voice controller, the method includes: determining whether items to be set in the image forming apparatus include a sensitive item which includes sensitive information; determining whether setting information received by the operation unit for the item that is determined to be the sensitive item, matches the identification information stored in the storage; and requesting the user to change the setting information when the setting information matches the identification information.

According to an another embodiment, a method for setting an image forming apparatus, the image forming apparatus including: an operation unit that receives an operation through a user's action; a voice input unit that receives input of voice; a voice identification unit that identifies the voice received by the voice input unit; a voice controller that receives an operation using a user's voice, in accordance with identification information identified by the voice identification unit, the identification information being included in the voice; a storage that stores the identification information identified by the voice identification unit; and a controller that controls the image forming apparatus in accordance with the operation received by the operation unit or the voice controller, the method includes: determining whether items to be set in the image forming apparatus include a sensitive item which includes sensitive information; when the operation unit receives setting information for the item determined to be the sensitive item, authenticating the setting information whether the setting information matches pre-set information of the sensitive item; determining whether the authenticated setting information matches the identification information stored in the storage; and requesting the user to change the setting information when the setting information matches the identification information.

The foregoing and other objects, features, aspects and advantages of the present disclosure will become more apparent from the following detailed description of the present disclosure when taken in conjunction with the accompanying drawings.

### Brief Description of the Drawings

The advantages and features provided by one or more embodiments of the present disclosure will become more fully understood from the detailed description given herein below and the appended drawings which are given by way of illustration only, and thus are not intended as a definition of the limits of the present disclosure.
Fig. 1 is a schematic view showing an appearance of a multi-functional peripheral (MFP) according to Embodiment 1.
Fig. 2 is a block diagram showing an overview of a hardware configuration of the MFP according to Embodiment 1.
Fig. 3 is a block diagram for illustrating a configuration of a system controller.
Fig. 4 is a block diagram for illustrating a configuration of a job processing unit.
Fig. 5 is a flowchart for illustrating a process for changing the settings of the MFP according to Embodiment 1.
Fig. 6 is a flowchart for illustrating a voice identification memory process.
Fig. 7 is a diagram showing a login screen of the MFP, requesting for a registered password.
Fig. 8 is a diagram showing a screen requesting a user to change a password.
Fig. 9 is a diagram showing a menu screen.
Fig. 10 is a diagram showing a user registration screen on which a user sets a password.
Fig. 11 is a diagram showing a screen requesting a user to change a password to be set.
Fig. 12 is a diagram showing a settings completion screen.
Fig. 13 is a flowchart for illustrating a process for executing a job in an MFP according to Embodiment 2.
Fig. 14 is a flowchart for illustrating the process for executing the job in the MFP according to Embodiment 2.
Fig. 15 is a diagram showing a job list screen displayed on a control panel upon a job operation request.
Fig. 16 is a diagram showing a job password entry screen displayed on a control panel.
Fig. 17 is a diagram showing a screen requesting a user to change a job password.
Fig. 18 is a diagram showing a job execution completion screen.
Fig. 19 is a flowchart for illustrating document processing in an MFP according to Embodiment 3.
Fig. 20 is a flowchart for illustrating the document processing in the MFP according to Embodiment 3.
Fig. 21 is a diagram showing a document list screen displayed on a control panel upon a document display request.
Fig. 22 is a diagram showing a menu screen on which a user selects various operations to be performed on a document selected by the user from the document list.
Fig. 23 is a diagram showing a password entry screen displayed on a control panel.
Fig. 24 is a diagram showing a document save screen on which a user adds a password to scanned data having a job command add thereto, when saving the scanned data to a box.
Fig. 25 is a diagram showing a screen requesting a user to change a document password.
Fig. 26 is a diagram showing a screen requesting a user to enter a password embedded in a document.

### Detailed Description of Embodiments

Hereinafter, one or more embodiments of the present disclosure will be described with reference to the drawings. However, the scope of the present disclosure is not limited to the disclosed embodiments.

### <Embodiment 1>

Embodiment 1 will be described, with reference to the accompanying drawings. Note that like reference signs are used to refer to like or corresponding parts, and the descriptions of such parts are not repeated.

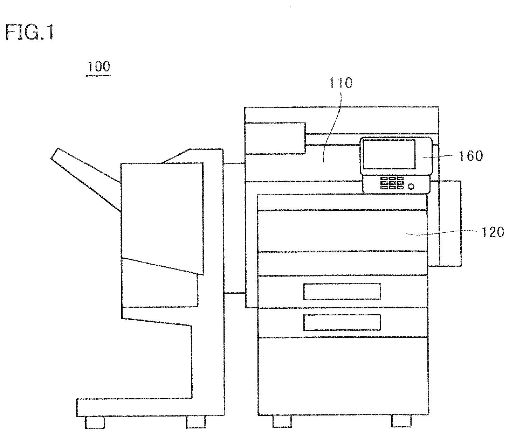

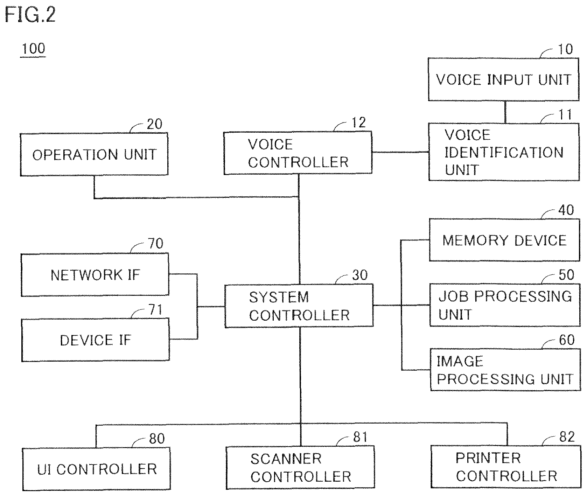

Fig. 1 is a schematic view showing an appearance of a multi-functional peripheral (MFP) 100 according to Embodiment 1. Fig. 2 is a block diagram showing an overview of a hardware configuration of MFP 100 according to Embodiment 1. MFP 100 is now described, with reference to Figs. 1 and 2. MFP 100 includes a document reading unit 110 for reading a document, an image forming unit 120, and a control panel 160 serving as a user interface.

Document reading unit 110 includes photoelectric conversion elements, such as a charge coupled device (CCD), and optically reads a document which is fed from an automatic document feeder, and outputs an image of the document in the form of electronic data.

Image forming unit 120 performs the xerographic printing process on the image output from document reading unit 110 or an image transmitted from a smartphone, to form the image on a recording medium, such as a paper supplied from a paper feed unit, thereby visualizing the image. For color printing, image forming unit 120 forms the image using four color toners (yellow, magenta, cyan, black). Note that image forming unit 120 may perform the inkjet printing process. Control panel 160 includes a display unit and an operation unit.

MFP 100 also includes an operation unit 20, a system controller 30, a memory device 40, a job processing unit 50, an image processing unit 60, a network interface (IF) 70, a device IF 71, a user interface (UI) controller 80, a scanner controller 81, and a printer controller 82. Furthermore, in addition to the general MFP configurations, MFP 100 includes a voice input unit 10, a voice identification unit 11, and a voice controller 12. As such, upon receipt of input of user voice by voice input unit 10, MFP 100 can identify the voice by voice identification unit 11, and receive an operation of control panel 160 corresponding to the identified voice by voice controller 12. Voice controller 12 transmits to system controller 30 an operational signal corresponding to the user operation received by voice controller 12.

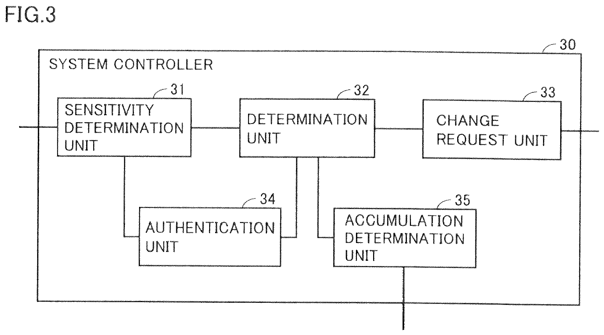

Operation unit 20 receives a user operation on the operation screen of control panel 160, and transmits an operational signal corresponding to the operation to system controller 30. Based on the operational signal, system controller 30 controls MFP 100. System controller 30 includes a CPU for executing a program for each control. The functionaries of system controller 30 for processing sensitive information are now described with reference to the drawing. Fig. 3 is a block diagram for illustrating a configuration of system controller 30. System controller 30 includes a sensitivity determination unit 31, a determination unit 32, and a change request unit 33. Sensitivity determination unit 31 determines whether items to be set in MFP 100 include a sensitive item which includes sensitive information. Determination unit 32 determines whether setting information, received by operation unit 20 for the item that is determined to be the sensitive item by sensitivity determination unit 31, matches identification information stored in memory device 40. If determination unit 32 determines the setting information matches the identification information, change request unit 33 requests the user to change the setting information. System controller 30 further includes an authentication unit 34 and an accumulation determination unit 35. If operation unit 20 receives the setting information for the item that is determined to be the sensitive item by sensitivity determination unit 31, authentication unit 34 authenticates the setting information whether the setting information matches pre-set information of the sensitive item. Accumulation determination unit 35 determines whether a job is to be accumulated in memory device 40 after the job is executed.

Memory device 40 includes a ROM (Read-Only Memory), a RAM (Random Access Memory), a nonvolatile memory, etc. The ROM stores programs executed by the CPU of system controller 30, and data which is used to execute the programs. The RAM is used as a work area when the CPU executes the programs. The RAM also stores read data (image data) which is continuously sent from document reading unit 110, identification information identified by voice identification unit 11, etc. The nonvolatile memory stores information that is pre-set to the sensitive item, job information, information about a box containing multiple documents, etc. in MFP 100

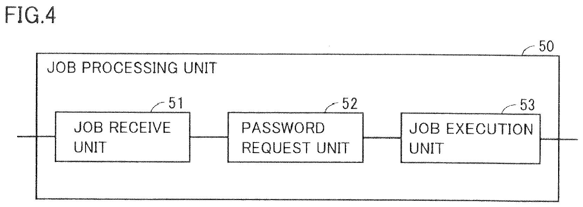

Job processing unit 50 processes the job received through network IF 70 or the like into information that can be processed by document reading unit 110, image forming unit 120, etc. Fig. 4 is a block diagram for illustrating a configuration of job processing unit 50. Specifically, job processing unit 50 includes a job receive unit 51, password request unit 52, and a job execution unit 53. Job receive unit 51 receives a job protected by a password which is sensitive information. Password request unit 52 requests the user to enter a password when the job received by job receive unit 51 is to be executed. Job execution unit 53 executes the job when the setting information, received by operation unit 20 according to password request unit 52, matches the password. Image processing unit 60 processes the image read by document reading unit 110, and forms the image on a sheet by image forming unit 120.

Network IF 70 is an interface for connecting MFP 100 to a network. System controller 30 communicates, via network IF 70, with a computer or smartphone connected to the network, and transmits/receives data to/from the computer or smartphone. Network IF 70 is, for example, connectable to another device (e.g., smartphone) to receive job data to print from the other device. Network IF 70 is also capable of communication with a computer connected to the Internet via the network. Note that network IF 70 may perform wireless LAN communications.

Device IF 71 is a connector for connecting devices, such as voice input unit 10, document reading unit 110, image forming unit 120, and control panel 160, and system controller 30. UI controller 80 controls control panel 160. Scanner controller 81 controls document reading unit 110. Printer controller 82 controls image forming unit 120.

Note that the medium storing the programs that are executed by the CPU of system controller 30 is not limited to a CD-ROM, and may be a semiconductor memory, such as, an optical disc (MO (Magnetic Optical Disc)/MD (Mini Disc)/DVD (Digital Versatile Disc)), an IC card, an optical card, a mask ROM, an EPROM (Erasable Programmable ROM), or an EEPROM (Electrically EPROM).

The programs that are executed by the CPU of system controller 30 are not limited to the programs recorded in CD-ROMs. The programs may be stored in an auxiliary storage (e.g., HDD), loaded into a RAM, and executed. In this case, another computer that is connected to the network via network IF 70 may rewrite the programs stored in the auxiliary storage of MFP 100 or add and write a new program to the auxiliary storage. Furthermore, MFP 100 may download a program from the other computer connected to the network via network IF 70, and store that program into the auxiliary storage. Examples of the programs, as used herein, include not only programs that are executable directly by the CPU of system controller 30, but also source programs, compressed programs, and encrypted programs.

Next, a process for preventing leakage of the sensitive information in MFP 100 according to the present embodiment are now described in detail. Upon receipt of user voice input through voice input unit 10 (e.g., a microphone), MFP 100 identifies the voice by voice identification unit 11, and receives the voice, by voice controller 12, as an instruction for operating the operation screen of control panel 160. Moreover, system controller 30 stores the identification information, identified by voice identification unit 11, into memory device 40. Note that the identification information stored in memory device 40 will be referred to as a voice identification memory. Each time the screen of control panel 160 transitions to another screen, operation unit 20 displays an operation screen generated by UI controller 80. A sensitive information flag is previously enabled for a setting item that requires entry of sensitive information (e.g., a password), among setting items which are displayed on the operation screen. Here, the sensitive information is information that is disclosed only to a specific user, including a password, a destination, setting information, etc. UI controller 80 confirms each setting item on the operation screen as to whether the sensitive information flag of the setting item is enabled, thereby determining whether this item is a setting item which requires entry of the sensitive information. MPU 100 may also allow the administrator to enable or disable the sensitive information flag for each setting item.

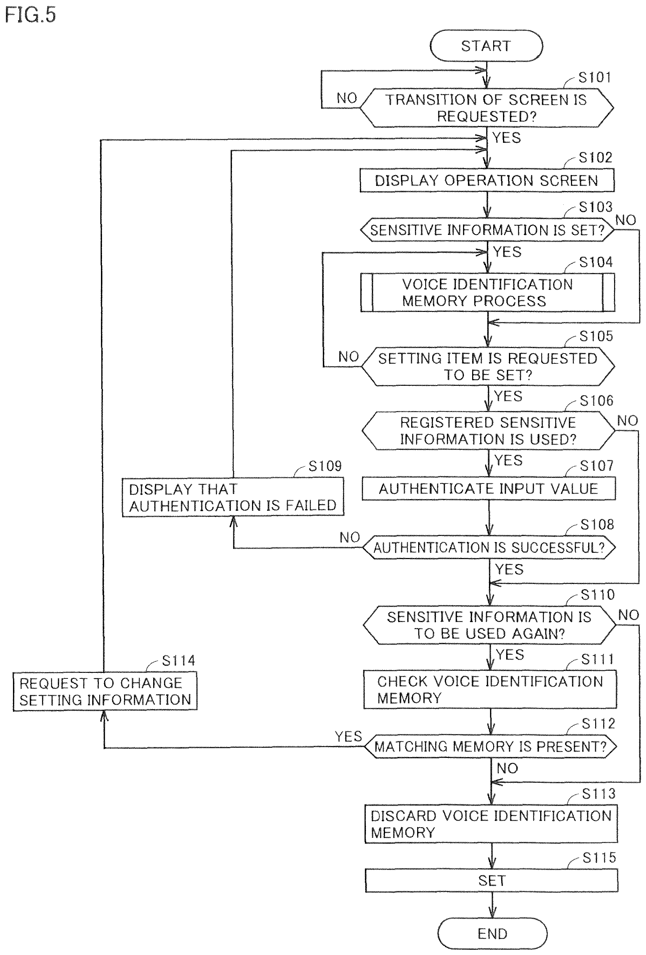

Fig. 5 is a flowchart for illustrating a process for changing the settings in the MFP according to Embodiment 1. Initially, system controller 30 determines whether operation unit 20 receives a request to transition the screen from the user (step S101). If operation unit 20 does not receive a request to transition the screen from the user (NO in step S101), system controller 30 returns the process to step S101, and waits for a request to transition the screen from the user. If operation unit 20 receives a request to transition the screen from the user (YES in step S101), a destination operation screen is generated by UI controller 80 and system controller 30 displays the destination operation screen on control panel 160 (step S102). System controller 30 causes UI controller 80 to determine whether the setting items displayed in the operation screen include any setting item whose sensitive information flag is enabled (the sensitive information is set) (step S103).

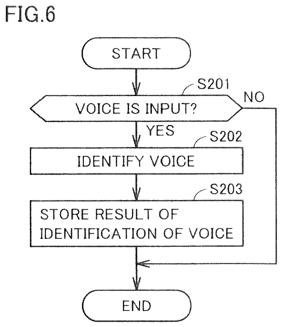

If the operation screen includes a setting item (sensitive item) having sensitive information set thereto (YES in step S103), system controller 30 performs a voice identification memory process of storing a voice identification memory into memory device 40 (step S104). The process in step S104 is now described in more detail. Fig. 6 is a flowchart for illustrating the voice identification memory process. At the start of the voice identification memory process, initially, system controller 30 determines whether voice input is received through voice input unit 10 (the presence or absence of voice input) (step S201). If determined that voice input is received through voice input unit 10 (voice input is present) (YES in step S201), system controller 30 identifies the voice (step S202). System controller 30 stores the identification information, identified by voice identification unit 11, as a voice identification memory into memory device 40 (step S203).

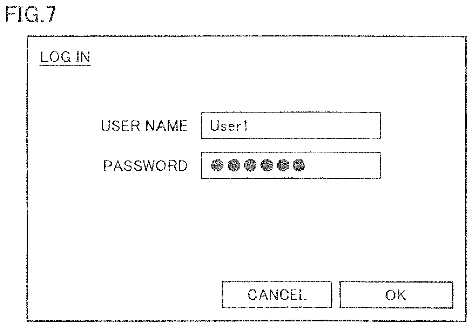

Returning to Fig. 5, if the operation screen does not include a setting item having sensitive information set thereto (NO in step S103) or after the process in step S104, system controller 30 determines whether the user has selected a setting item having the sensitive information set thereto, and requested to set the selected setting item (step S105). If the user does not request to set setting item (NO in step S105), system controller 30 returns the process to step S104, and continues the voice identification memory process. If the user requests to set the setting item (YES in step S105), system controller 30 determines whether the setting item, which the user is requesting to set, requires use of registered sensitive information (step S106). Here, the setting item which requires use of registered sensitive information is, for example, a setting item which requires use of a registered password to log in to MFP 100. Fig. 7 is a diagram showing a login screen of MFP 100, requesting a registered password. If the setting item requires the use of registered sensitive information (YES in step S106), and, for example, a password is entered in the password entry field as shown in Fig. 7, system controller 30 authenticates whether the entered password (the input value) matches the registered password (step S107).

System controller 30 authenticates the entered password in step S107, and determines whether the authentication is successful (step S108). If the authentication is failed (NO in step S108), system controller 30 displays information indicating that the authentication is failed on a screen of control panel 160 (step S109), and returns the process to step S102. If the authentication is successful (YES in step S108), system controller 30 determines whether the sensitive information, requested to be set from the user, is to be used again (step S110). If the sensitive information is to be used again (YES in step S110), system controller 30 checks the voice identification memory stored in memory device 40, whether the voice identification memory contains the setting information received by operation unit 20 from the user (step Sill).

System controller 30 checks the voice identification memory stored in memory device 40 in step S111 to determine whether the setting information, received by operation unit 20 from the user, matches the voice identification memory (step S112). If the setting information does not match the voice identification memory (NO in step S112), system controller 30 discards the voice identification memory stored in memory device 40 (step S113). System controller 30 discards the voice identification memory stored in memory device 40 also when the sensitive information is not to be used again (NO in step S105). Specifically, for a password that can be used one time only, such as a one-time password, system controller 30 skips the processes in steps S111 through S112, and discards the voice identification memory stored in memory device 40.

If the setting information matches the voice identification memory (YES in step S112), system controller 30 requests the user to change the setting information, for example, change the registered password (step S114).

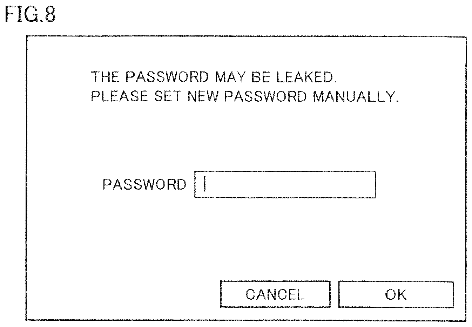

Fig. 8 is a diagram showing a screen requesting the user to change a password. In Fig. 8, system controller 30 suggests that the password may be leaked, and requests the user to change the password. In other words, if the user utters the password while the login screen is being displayed, another person can hear that voice and thus the password, which is sensitive information, may be leaked. System controller 30 preserves security by requesting the user to change the registered password.

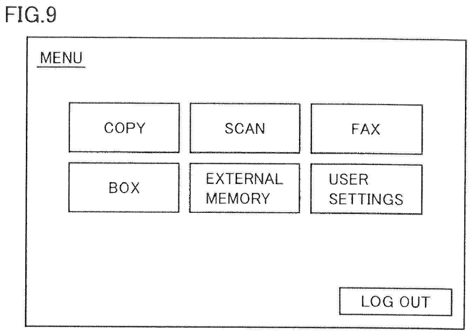

After the process in step S114, system controller 30 returns the process to step S102. After discarding the voice identification memory stored in memory device 40 in step S113, system controller 30 sets the setting item (step S115). If a screen of the setting item is a login screen as shown in Fig. 7, system controller 30 displays a menu screen in step S115. Fig. 9 is a diagram showing a menu screen.

As an example of the setting item that requires the user to use the registered sensitive information, the user authentication using the user's password is described, with respect to Figs. 7 to 9. In addition to this, for a setting item requiring authentication, such as the administrator's password, a box password, leakage of spoken sensitive information can be prevented in a similar manner by performing the similar processing. Furthermore, system controller 30 determines whether the above password is a one-time password in step S110. If the password is determined to be sensitive information that cannot be used again, system controller 30 skips the process of checking the voice identification memory (step Sill), thereby skipping the settings change request process (step S114) that is unnecessary to the user. Moreover, system controller 30 authenticates the value input by the user whether the input value matches the registered sensitive information, and checks the voice identification memory only if the authentication is successful (step Sill), thereby preventing the sensitive information from being identified through a brute-force attack or a dictionary attack using voice.

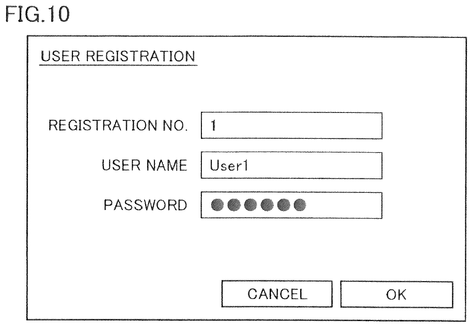

Returning to step S106, if the setting item does not require the use of registered sensitive information (NO in step S106), system controller 30 skips steps S107 through step S109, displays the setting item that does not require the use of registered sensitive information on the screen of control panel 160, and performs the process of step S110. Examples of the setting item that does not require the use of registered sensitive information include an item for which the user sets a password on a user registration screen. Fig. 10 is a diagram showing a user registration screen on which the user sets a password. For example, as a password is entered in the password setting field shown in Fig. 10, system controller 30 authenticates whether the entered password (the input value) matches the registered password (step S107).

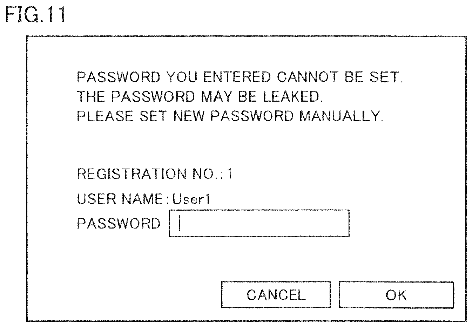

If the password entered in the setting field matches the voice identification memory (YES in step S112), system controller 30 requests the user to change the setting information, for example, change the password to be set (step S114). Fig. 11 is a diagram showing a screen requesting the user to change to the password to be set. In Fig. 11, system controller 30 suggests that a password the user is trying to set may be leaked, and requests the user to change the password to be set. In other words, if the user utters a password the user is trying to set, while the user registration screen is being displayed, another person can hear that voice and thus the password, which is sensitive information, may be leaked. System controller 30 preserves security by requesting the user to change the password the user is trying to set.

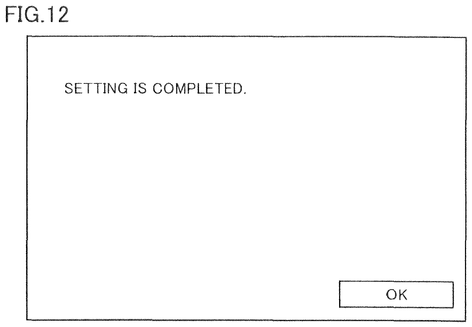

After discarding the voice identification memory stored in memory device 40 in step S113, system controller 30 sets the setting item (step S115). If a screen of the setting item is a user registration screen as shown in Fig. 10, system controller 30 displays a settings completion screen in step S115. Fig. 12 is a diagram showing the settings completion screen. As an item for which the sensitive information is set, an item for which a user password is set on the user registration screen is described, with respect to Figs. 10 to 12. In addition to this, the similar processing can be performed on an item for which the sensitive information, such as a box password, a document password, a job password, a storage encryption password, a storage lock password, or a shared key, is set, thereby preventing leakage of spoken sensitive information in a similar manner.

As described above, the image forming apparatus (MFP 100) according to the present embodiment is an image forming apparatus operable with voice control, and includes: operation unit 20 which receives an operation through a user's action; voice input unit 10 which receives input of voice; voice identification unit 11 which identifies the voice received by the voice input unit 10; voice controller 12 which receives an operation through a user's voice, in accordance with identification information identified by voice identification unit 11, the identification information being included in the voice; memory device 40 which stores the identification information identified by voice identification unit 11; and system controller 30 which controls the image forming apparatus, according to the operation received by operation unit 20 or voice controller 12. System controller 30 includes: sensitivity determination unit 31 which determines whether items to be set in the image forming apparatus include a sensitive item which includes the sensitive information; determination unit 32 which determines whether setting information, received by operation unit 20 for the item that is determined to be the sensitive item by sensitivity determination unit 31, matches the identification information stored in memory device 40; and change request unit 33 which requests the user to change the setting information if determination unit 32 determines that the setting information matches the identification information. With this, the image forming apparatus according to the present embodiment can prevent the sensitive information spoken through the voice control from being leaked when setting the sensitive item which contains the sensitive information.

In the image forming apparatus (MFP 100) according to the present embodiment, system controller 30 includes: sensitivity determination unit 31 which determines whether items to be set in the image forming apparatus include a sensitive item which includes the sensitive information; an authentication unit which, when operation unit 20 receives setting information for the item that is determined to be the sensitive item by sensitivity determination unit 31, authenticates the setting information whether the setting information matches pre-set information of the sensitive item; determination unit 32 which determines whether the setting information authenticated by the authentication unit matches the identification information stored in memory device 40; and change request unit 33 which requests the user to change the pre-set information of the sensitive item if determination unit 32 determines that the setting information matches the identification information. With this, the image forming apparatus according to the present embodiment can prevent the sensitive information spoken through voice control from being leaked when authenticating the sensitive item which contains the sensitive information.

A method for setting the image forming apparatus (MFP 100) according to the present embodiment includes: determining whether items to be set in the image forming apparatus include a sensitive item which includes the sensitive information; determining whether the setting information, received by operation unit 20 for the sensitive item, matches the identification information stored in memory device 40; and requesting the user to change the setting information if the setting information matches the identification information. With this, the image forming apparatus according to the present embodiment can prevent leakage of the sensitive information spoken through voice control by the method for setting the sensitive item which includes the sensitive information.

Moreover, the method for setting the image forming apparatus (MFP 100) according to the present embodiment includes: determining whether items to be set in the image forming apparatus include a sensitive item which includes the sensitive information; authenticating setting information, received by operation unit 20 for the item that is determined to be the sensitive item, whether the setting information matches pre-set information of the sensitive item; determining whether the authenticated setting information matches the identification information stored in memory device 40; and if the setting information matches the identification information, requesting the user to change the setting information. With this, the image forming apparatus according to the present embodiment can prevent leakage of the sensitive information spoken through voice control, by the method for setting the sensitive item which includes the sensitive information.

### <Embodiment 2>

In MFP 100, a user operates a job or document. When the user enters a password that is previously added to a job or document, as the user utters the password, another person can hear that voice. Thus, the password, which is sensitive information, may be leaked. Of course, if the job or document is discarded after various operations, the password will not be used again. Thus, the password will not be misused even if the sensitive information is leaked when it is entered. Thus, when the user operates a job with password or a document with password, MFP 100 determines whether the job or document is to be accumulated within MFP 100, together with the password, and, if that's the case, checks the voice identification memory.

Here, the document includes all the data subjected to image processing by an image processing unit 60 included in MFP 100, such as scanned data, image data, text data, and various app data. The document with password refers to a document that has a job command added thereto, which job command restricts access to the document with password. Furthermore, the job refers to a job that has a job command added thereto, which job command performs various operations on the above document. The job with password refers to the above job that has a job command added thereto, which job command restricts access to the job with password.

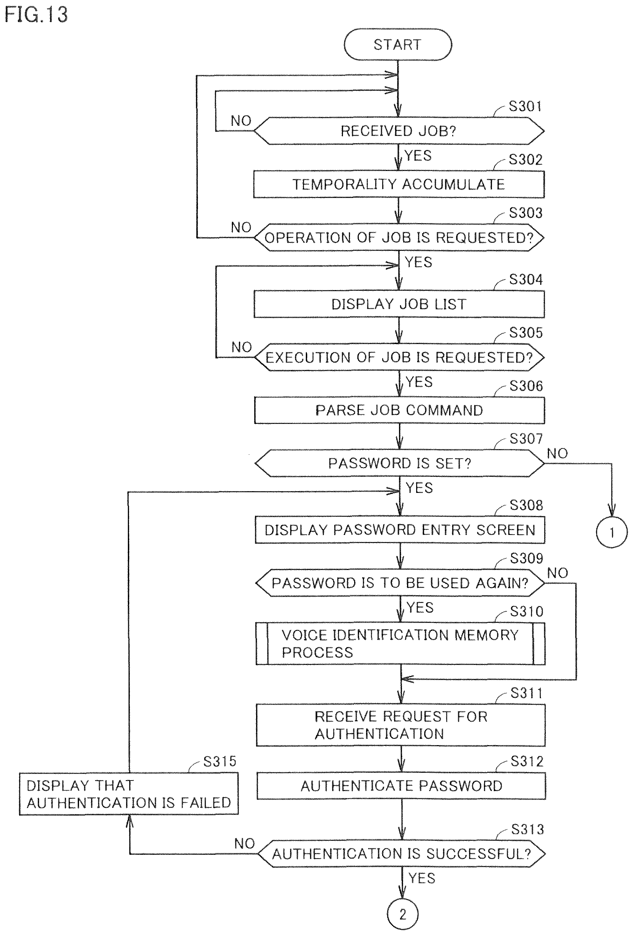

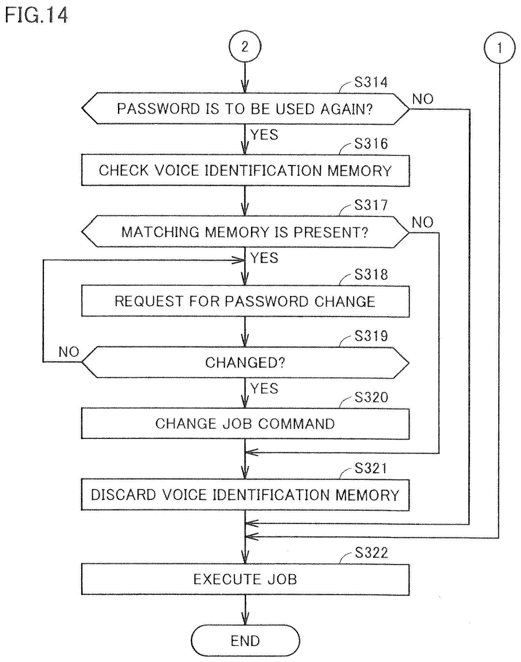

Next, a process for executing a job in MFP 100 is now described. Figs. 13 and 14 show a flowchart for illustrating the process when a job is executed in the MFP according to Embodiment 2. Initially, system controller 30 determines the presence or absence of a job received externally through a network IF 70 (step S301). If the MFP does not receive a job (NO in step S301), system controller 30 returns the process to step S301, and waits for a job to be transmitted externally. If the MFP receives a job (YES in step S301), system controller 30 temporality accumulates the job in a memory device 40 (step S302).

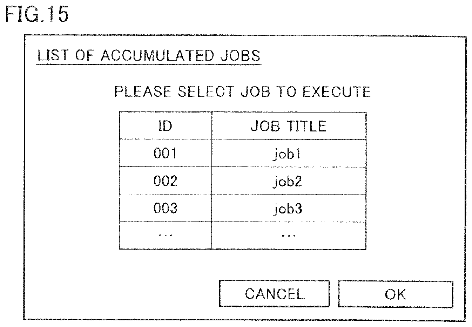

System controller 30 determines whether there is a job operation request from the user with respect to the job accumulated in memory device 40 (step S303). If no job operation request is present (NO in step S303), system controller 30 returns the process to step S301. If a job operation request is present (YES in step S303), system controller 30 displays a list of jobs on a control panel 160 (step S304). Fig. 15 is a diagram showing a job list screen displayed on control panel 160 when a job operation request is present. As a list of jobs is displayed on the screen, system controller 30 determines whether there is a request for execution of a job from the user, as shown in Fig. 13 (step S305). If there is no request for execution of a job (NO in step S305), system controller 30 returns the process to step S304. If there is a request for execution of a job (YES in step S305), system controller 30 parses a command for the job accumulated in memory device 40 (step S306).

MFP 100 temporarily accumulates a job which is received from outside through network IF 70. If the user selects a job and instruct MFP 100 to execute the job, job processing unit 50 parses a job command added to the job, and executes the job in accordance with the job command. Note that examples of the job received from outside of MFP 100 include a job received via a printer driver installed in an external terminal, a job received from an external fax machine via a telephone line, a job received via an external mail server or a mail server function within MFP 100, a job received via a Web application running on a browser on an external terminal, and a job saved to an external memory, such as a USB memory attached to MFP 100.

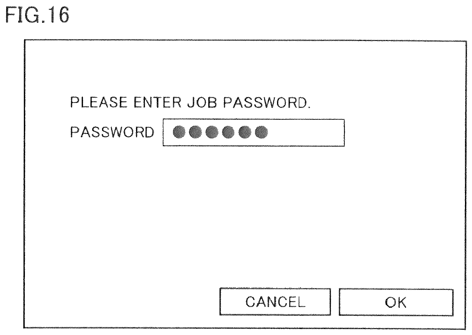

After parsing the job command of the job accumulated in memory device 40, system controller 30 determines whether a password is set to the job (step S307). If a password is set to the job (YES in step S307), system controller 30 displays a password entry screen on control panel 160 (step S308). Fig. 16 is a diagram showing a job password entry screen displayed on control panel 160. Returning to Fig. 13, system controller 30 determines whether the entered password is to be used again (step S309). If the password is to be used again (YES in step S309), system controller 30 performs a voice identification memory process of storing a voice identification memory into memory device 40 (step S310). The voice identification memory process in step S310 is the same as the voice identification memory process in step S104 shown in Fig. 5, and the detailed description thereof will thus not be repeated.

For example, as a password is entered in a password entry field (see Fig. 16), system controller 30 receives a request to authenticate whether the entered password (the input value) matches the password of the job (a job password) (step S311), and authenticates the password (step S312). System controller 30 authenticates the password in step S312, and determines whether the authentication is successful (step S313). If the authentication is failed (NO in step S313), system controller 30 displays information indicating that the authentication is failed on the screen of control panel 160 (step S315), and returns the process to step S308. If the authentication is successful (YES in step S313), system controller 30 determines whether the entered password is to be used again, as shown in Fig. 14 (step S314).

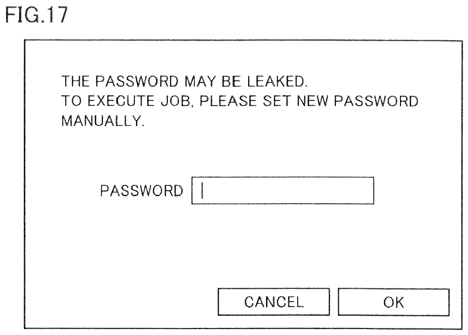

If the password is to be used again (YES in step S314), system controller 30 checks whether the voice identification memory stored in memory device 40 contains the password (the setting information) entered by the user on operation unit 20 (step S316). System controller 30 checks the voice identification memory in step S316, and determines whether the password entered by the user on operation unit 20 matches the voice identification memory stored in memory device 40 (step S317). If the password matches the voice identification memory (YES in step S317), system controller 30 requests the user to change the setting information, that is, change the job password (step S318). Fig. 17 is a diagram showing a screen requesting the user to change a job password. In Fig. 17, system controller 30 suggests that the job password may be leaked, and requests the user to change the job password. In other words, if the user utters the job password while the job password is being displayed on the input screen, another person can hear that voice and thus the job password, which is sensitive information, may be leaked. System controller 30 preserves security by requesting the user to change the job password.

System controller 30 requests the user to change the job password in step S318, and determines whether the job password is changed (step S319). If the job password remains unchanged (NO in step S319), system controller 30 returns the process to step S318. If the job password is changed (YES in step S319), system controller 30 changes the job command that contains the job password (step S320). After the job command is changed, or if the password entered by the user on operation unit 20 does not match the voice identification memory (NO in step S317), system controller 30 discards the voice identification memory stored in memory device 40 (step S321).

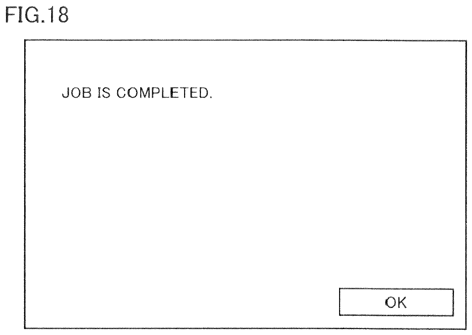

After discarding the voice identification memory stored in memory device 40 in step S321, if no password is set (NO in step S307) or if the password entered by the user does not match the voice identification memory (NO in step S317), system controller 30 executes the job (step S322). Fig. 18 is a diagram showing a job execution completion screen.

If the job command of the job selected by the user has a password added thereto, system controller 30 requests the user to enter the job password (step S311). If the user enters the correct password, system controller 30 executes the job (step S322). If the user enters a wrong password, system controller 30 requests the user to re-enter a password, without executing the job. Note that if the user enters the correct password, system controller 30 parses, by job processing unit 50, the job command added to that job, and stores the job in memory device 40 together with the password, or externally transmits the job together with the password. In such a case, before executing the job, system controller 30 confirms whether the password is recorded in the voice identification memory. If a corresponding record is present, system controller 30 determines that this password is leaked, and requests the user to change the password (step S318). As the user sets a new password, system controller 30 adds the new password to the job command and executes the job.

As described above, the image forming apparatus (MFP 100) according to Embodiment 2 includes: job receive unit 51 which receives a job protected by a password which is sensitive information; password request unit 52 which requests a user to enter a password to execute the job received by job receive unit 51; job execution unit 53 which executes the job when setting information, received by operation unit 20 according to password request unit 52, matches the password; and memory device 40 (a job accumulating unit) which accumulates the job executed by job execution unit 53. System controller 30 further includes an accumulation determination unit 35 which determines whether the job is to be accumulated into memory device 40 after the job is executed by job execution unit 53. If accumulation determination unit 35 determines that the job is to be accumulated in memory device 40, determination unit 32 determines whether the password matches the identification information stored in memory device 40. If determination unit 32 determines that the password, entered by the user, matches the identification information, change request unit 33 requests the user to change the password. With this, the image forming apparatus (MFP 100) according to Embodiment 2 can prevent leakage of the sensitive information spoken through voice control when the job is password protected (the job has a job command having a password added thereto).

Note that the job received by job receive unit 51 may be a print job received from a terminal via a printer driver or a fax job received from an external FAX machine. The job received by job receive unit 51 may also be a job received from a terminal through an email, a job received via an application running on a terminal, or a job received via an external memory connected to the image forming apparatus.

### <Embodiment 3>

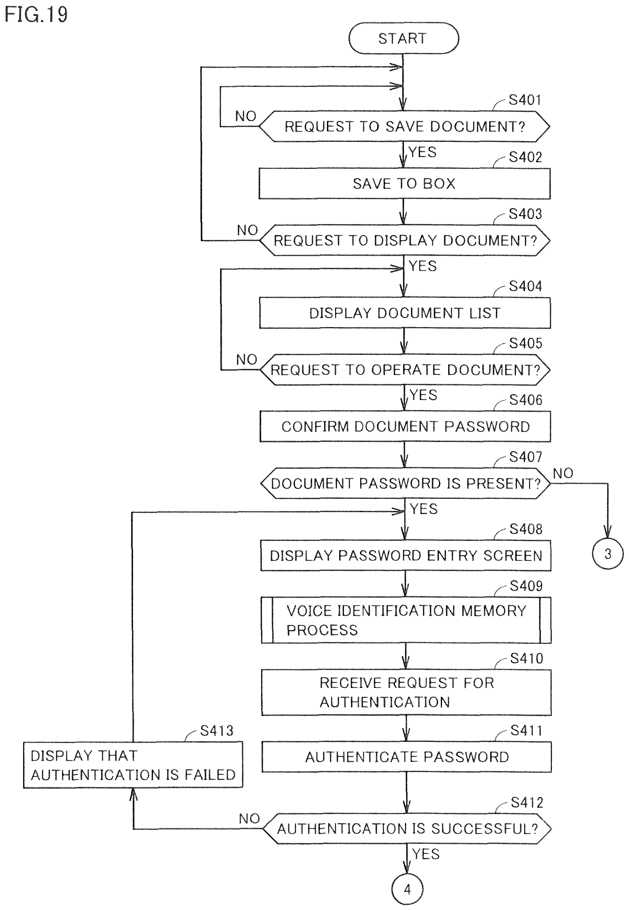

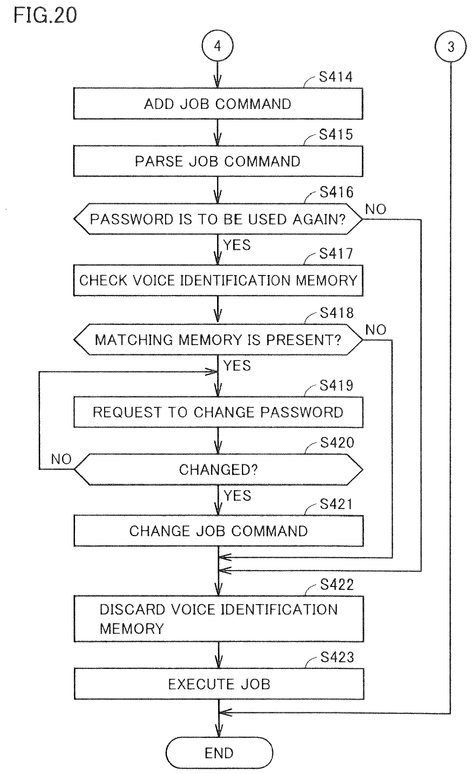

A document processing performed by an MFP 100 according to Embodiment 3 is now described. Figs. 19 and 20 show a flowchart for illustrating a document processing by MFP 100 according to Embodiment 3. MFP 100 according to Embodiment 3 includes a box function of saving, to a box in memory device 40 as a document, scanned data of a document read by document reading unit 110 or document data received from outside of MFP 100 through a network IF 70. Initially, system controller 30 determines whether MFP 100 has received a request to save a document to the box (step S401). If MFP 100 does not receive a request to save a document to the box (NO in step S401), system controller 30 returns the process to step S401, and waits for a request to save a document to the box. If MFP 100 receives a request to save a document to the box (YES in step S401), system controller 30 saves the document to the box (step S402).

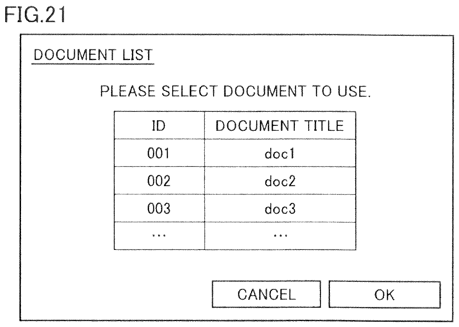

System controller 30 determines whether the user is requesting to display the document saved in the box (step S403). If a document display request is absent (NO in step S403), system controller 30 returns the process to step S401. If a document display request is present (YES in step S403), system controller 30 displays a document list on control panel 160 (step S404). Fig. 21 is a diagram showing a document list screen that is displayed on control panel 160 when a document display request is present. As the document list is displayed on the screen, system controller 30 determines whether the user is requesting to operate the document, as shown in Fig. 19 (step S405). If a document operation request is absent (NO in step S405), system controller 30 returns the process to step S404. If a document operation request is present (YES in step S405), system controller 30 confirms whether the saved document is password protected (step S406). Note that if the document to be saved is a document with password, system controller 30 saves the document data into the box, together with the password.

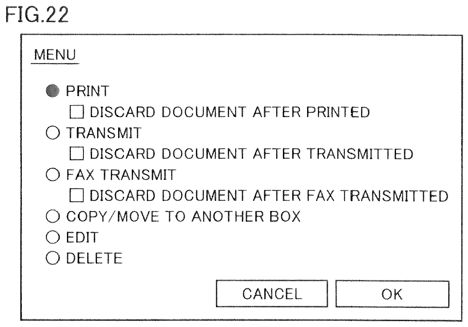

In MFP 100, as the user selects a document from the list of documents saved in the box, and specifies various operations, such as printing, transmitting, FAX transmitting, copying or moving the document to another box, editing, or deleting the document, the specified operation is added as a job command to the document data. As the user instructs MFP 100 to execute the job, an operation specified for the document is performed according to the job command. Fig. 22 is a diagram showing a menu screen for allowing the user to select various operations after selecting a document from the document list.

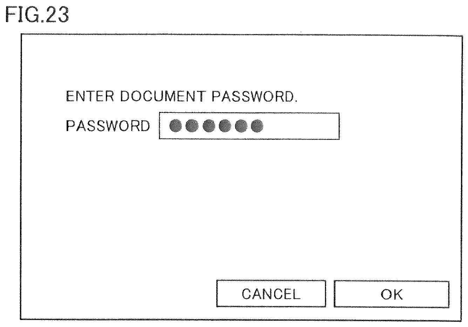

Next, as a result of parsing the job command of the saved document, system controller 30 determines whether a password is set to the document (step S407). If no password is set to the document (NO in step S407), system controller 30 ends the process. If a password is set to the document (YES in step S407), system controller 30 displays a password entry screen on control panel 160 (step S408). Fig. 23 is a diagram showing a password entry screen displayed on control panel 160. Returning to Fig. 19, system controller 30 executes the voice identification memory process of storing the voice identification memory into memory device 40 (step S409). The voice identification memory process in step S409 is the same as the voice identification memory process in step S104 shown in Fig. 5, and the detailed description thereof will thus not be repeated.

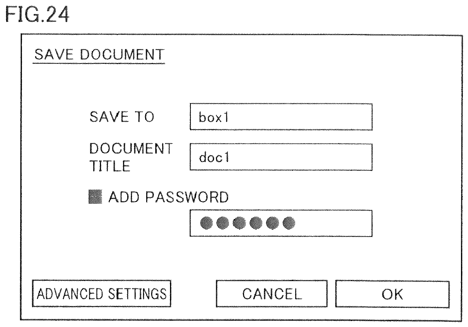

As a password is entered in the password entry field, for example, as shown in Fig. 23, system controller 30 receives a request to authenticate the entered password whether the entered password (the input value) matches the password of the document (the document password) (step S410), and authenticates the password (step S411). System controller 30 authenticates the entered password in step S411, and determines whether the authentication is successful (step S412). If the authentication is failed (NO in step S412), system controller 30 displays information indicating that the authentication is failed on the screen of control panel 160 (step S413), and returns the process to step S408. As shown in Fig. 14, if the authentication is successful (YES in step S412), that is, if the user enters the correct password and the authentication is successful, system controller 30 adds to the document, by job processing unit 50, a job command of the operation specified by the user (step S414). Note that job processing unit 50 also serves as a command additional unit which adds a job command to a document. Specifically, as the user sets a paper on document reading unit 110, specifies a save to box or the destination, and executes the job, MFP 100 adds the job command to the scanned data, obtained by scanning the paper, and saves the scanned data to a box, or MFP 100 adds the job command to the scanned data and transmits the scanned data to the destination specified by the user. Fig. 24 is a diagram showing a document save screen on which the user adds a password to scanned data having a job command added thereto to save the scanned data to a box. Next, system controller 30 parses the job command added to the document (step S415). System controller 30 further determines whether the entered password is to be used again (step S416).

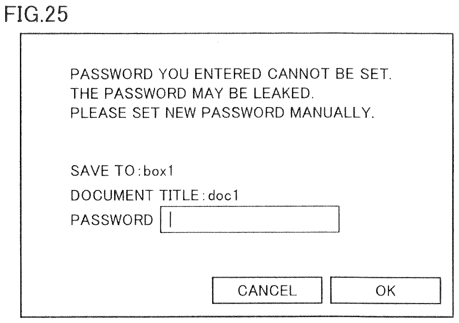

If the password is to be used again (YES in step S416), system controller 30 checks whether the voice identification memory stored in memory device 40 contains the password (the setting information) received by operation unit 20 from the user (step S417). System controller 30 checks the voice identification memory stored in memory device 40 in step S417, and determines whether the password received by operation unit 20 from the user matches the voice identification memory (step S418). If the password matches the voice identification memory (YES in step S418), system controller 30 requests the user to change the setting information, that is, change the document password (step S419). Fig. 25 is a diagram showing a screen requesting the user to change the document password. In Fig. 25, system controller 30 suggests that the document password may be leaked, and requests the user to change the document password. In other words, if the user utters the document password while the document password entry screen is being displayed, another person can hear that voice, and thus the document password, which is sensitive information, may be leaked. System controller 30 preserves security by requesting the user to change the document password.

System controller 30 requests the user to change the document password in step S419, and determines whether the document password is changed (step S420). If the document password remains unchanged (NO in step S420), system controller 30 returns the process to step S419. If the document password is changed (YES in step S420), system controller 30 changes the job command that includes the document password (step S421). After the job command is changed, if the password does not match the voice identification memory (NO in step S418) or if the password is not to be used again (NO in step S416), system controller 30 discards the voice identification memory stored in memory device 40 (step S422).

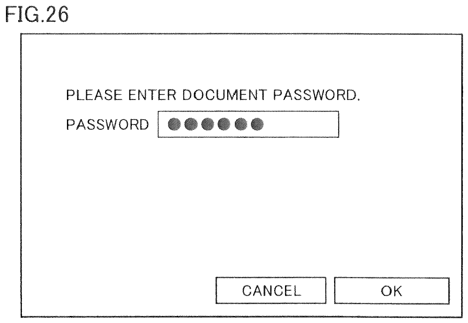

After discarding the voice identification memory stored in memory device 40 in step S422, system controller 30 executes the job (step S423). When executing a job for a document, which has a password that is invisible to people, such as a two-dimensional code or a barcode, embedded therein, system controller 30 reads the document by document reading unit 110, and saves it to a read box. Alternatively, when executing a job with the destination specified for a document having a password embedded therein, system controller 30 requests the user to enter the password. In other words, system controller 30 also serves as a password detection unit for detecting a password from scanned data obtained by scanning a document having the password embedded therein. Fig. 26 is a diagram showing a screen requesting the user to enter the password embedded in a document. If the user enters the correct password, system controller 30 executes the job. If the user enters a wrong password, system controller 30 requests the user to re-enter a password, without executing the job.

As described above, the image forming apparatus (MFP 100) according to Embodiment 3 includes job processing unit 50 (a command additional unit). When the document data of the job accumulated in memory device 40 (box) is password protected, password request unit 52 requests the user to enter a password. If the setting information, received by operation unit 20 according to password request unit 52, matches the password, job processing unit 50 adds a job command to the document data. After the job execution unit executes the job in accordance with the job command added by job processing unit 50, accumulation determination unit 35 determines whether the document data is to be accumulated in memory device 40. If the document data is determined to be accumulated in memory device 40 and determination unit 32 determines that the password matches the identification information, change request unit 33 requests the user to change the password. In this way, the image forming apparatus (MFP 100) according to Embodiment 3 can prevent leakage of the sensitive information spoken through voice control for a password protected document (a document to which a job command having a password is added).

The image forming apparatus (MFP 100) may include job processing unit 50 (the command additional unit) which adds a password-protected job command to scanned data obtained by scanning a paper. Before job execution unit 53 executes the job in accordance with the job command added by job processing unit 50, if the password matches the identification information, change request unit 33 may request the user to change the password.

The image forming apparatus (MFP 100) may include system controller 30 (a password detection unit) and job processing unit 50 (the command additional unit). System controller 30 detects a password from scanned data obtained by scanning a document having the password embedded therein. If system controller 30 detects the password, password request unit 52 requests the user to enter the password. If the setting information, received by operation unit 20 according to password request unit 52, matches the password, job processing unit 50 (a command additional unit) adds a job command to the scanned data. If the detected password matches the identification information, system controller 30 halts the execution of the job, and discards the scanned data. In other words, after determined that the user entered the correct password and before the job is executed, MFP 100 checks the voice identification memory. If a voice identification memory matching the password for the paper is recorded, MFP 100 determines that the spoken sensitive information may be leaked, halts the job, and discards the scanned data, thereby preventing unauthorized use of the spoken password that is leaked.

### <Variation>

The above-described embodiments fail to consider the case of failing to accurately identify, by voice identification unit 11, the voice input by the user, due to poor user utterance or surrounding noise. However, the present disclosure is not limited thereto. Considering the above case, MFP 100 may compare the voice identification memory with user input value. if the match percentage between the two is greater than or equal to a predetermined threshold, MFP 100 may determine that the user has uttered the sensitive information, and request the user to change the settings.

In the above-described embodiments, if there is a large number of voice identification memory data to compare, the comparison process takes time. Thus, the voice identification memory data is stored in memory device 40, which is recorded since the display of the operation screen which contains an item for which the sensitive information is set, until the sensitive information is set. However, the present disclosure is not limited thereto. MFP 100 may constantly store the voice identification memory data in memory device 40 while the power is on. MFP 100 may also store the voice identification memory data in memory device 40, which is recorded from the start of a user operation until the end of the user operation. MFP 100 may further use the voice identification memory for comparison, which is recorded since the cursor is moved to an item and input of the sensitive information to the item is enabled until the sensitive information is set to the item. If the user is logged in through user authentication, MFP 100 may use the voice identification memory for the comparison, which is recorded since the user log in until the sensitive information is set to the item, thereby more strictly checking the voice identification memory.

In the above-described embodiments, when MFP 100 has sensed leakage of spoken sensitive information, MFP 100 requests the user, operating MFP 100, to change the settings. However, the user may not have a privilege to change the sensitive information settings. For example, a user password or a box password may be managed so that only the administrator is allowed to change the password because if the user is allowed to manage such a password, the password may be lost, for example. Thus, if MFP 100 senses leakage of the spoken sensitive information, MFP 100 confirms whether the user, operating MFP 100, has a privilege to change the sensitive information settings. If the user has no such a privilege, MFP 100 may notify a user who has the privilege of a request to change the settings.

In the above-described embodiments, when MFP 100 senses leakage of the spoken sensitive information and requests the user to change the settings, the user may end the operation without changing the settings. For example, if the storage encryption word or the storage lock password is leaked, a malicious user can detach the storage from MFP 100 and use the sensitive information to retrieve all the data stored in the storage, which can lead to a critical security incident. Thus, if the settings is not changed by the user, MFP 100 may forcibly change the settings to a given set value that is only known to the administrator to disable the use of the leaked sensitive information. When leakage of the spoken sensitive information is sensed, MFP 100 may be capable of choosing, for each sensitive information to be set to an item, between requesting the user to change the sensitive information and forcibly changing the sensitive information.

In the above-described embodiments, irrespective of whether a person is around MFP 100, MFP 100 requests the user to change the settings when sensed leakage of spoken sensitive information. However, spoken sensitive information will not be leaked if no one is around while the user is operating MFP 100. Thus, MFP 100 may obtain, from an entry-exit management system, information about entry to and exit from a room in which MFP 100 is installed. MFP 100 may request the user to change the settings when MFP 100 confirms that more than one person has entered the room and has sensed leakage of spoken sensitive information.

Although embodiments of the present disclosure have been described and illustrated in detail, the disclosed embodiments are made for purposes of illustration and example only and not limitation. The scope of the present disclosure should be interpreted by terms of the appended claims.

## Claims

1. An image forming apparatus (100) operable with voice control, the image forming apparatus (100) comprising:
an operation unit (20) that receives an operation through a user's action;
a voice input unit (10) that receives input of voice;
a voice identification unit (11) that identifies the voice received by the voice input unit (10);
a voice controller (12) that receives an operation through a user's voice, in accordance with identification information identified by the voice identification unit (11), the identification information being included in the voice;
a storage (40) that stores the identification information identified by the voice identification unit (11); and
a controller (30) that controls the image forming apparatus (100), in accordance with the operation received by the operation unit (20) or the voice controller (12), wherein
the controller (30):
determines whether items to be set in the image forming apparatus (100) include a sensitive item which includes sensitive information;
determines whether setting information, received by the operation unit (20) for the item that is determined to be the sensitive item, matches the identification information stored in the storage (40); and
requests the user to change the setting information when the setting information matches the identification information.

2. An image forming apparatus (100) operable with voice control, the image forming apparatus (100) comprising:
an operation unit (20) that receives an operation through a user's action;
a voice input unit (10) that receives input of voice;
a voice identification unit (11) that identifies the voice received by the voice input unit (10);
a voice controller (12) that receives an operation through a user's voice, in accordance with identification information identified by the voice identification unit (11), the identification information being included in the voice;
a storage (40) that stores the identification information identified by the voice identification unit (11); and
a controller (30) that controls the image forming apparatus (100), in accordance with the operation received by the operation unit (20) or the voice controller (12), wherein
the controller (30):
determines whether items to be set in the image forming apparatus (100) include a sensitive item which includes sensitive information;
when the operation unit (20) receives setting information for the item determined to be the sensitive item, authenticates the setting information whether the setting information matches pre-set information of the sensitive item;
determines whether the authenticated setting information matches the identification information stored in the storage (40); and
requests the user to change the pre-set information of the sensitive item when the setting information matches the identification information.

3. The image forming apparatus (100) according to claim 2, further comprising:
a job receive unit (51) that receives a job protected by a password which is sensitive information;
a password request unit (52) that requests the user to enter the password when the job, received by the job receive unit (51), is executed;
a job execution unit (53) that executes the job when the setting information, received by the operation unit (20) in accordance with the password request unit (52), matches the password; and
a job accumulating unit (40) that accumulates the job executed by the job execution unit (53), wherein
the controller (30):
determines whether the job, executed by the job execution unit (53), is to be accumulated in the job accumulating unit;
when the job is determined to be accumulated in the job accumulating unit, determines whether the password matches the identification information stored in the storage (40), and
when the password matches the identification information, requests the user to change the password.

4. The image forming apparatus (100) according to claim 3, wherein
the job received by the job receive unit (51) is a print job received from a terminal via a printer driver.

5. The image forming apparatus (100) according to claim 3, wherein the job received by the job receive unit (51) is a fax job received from an external fax machine.

6. The image forming apparatus (100) according to claim 3, wherein
the job received by the job receive unit (51) is a job received from a terminal through an email.

7. The image forming apparatus (100) according to claim 3, wherein
the job received by the job receive unit (51) is a job received via an application running on a terminal.

8. The image forming apparatus (100) according to claim 3, wherein
the job received by the job receive unit (51) is a job received via an external memory connected to the image forming apparatus (100).

9. The image forming apparatus (100) according to claim 3,
when document data of the job accumulated in the job accumulating unit is protected by the password, the password request unit (52) requests the user to enter the password,
the image forming apparatus (100) further comprising
a command additional unit (50) that adds a job command to the document data when the setting information, received by the operation unit (20) in accordance with the password request unit (52), matches the password,
after the job is executed by the job execution unit (53) in accordance with the job command added by the command additional unit (50), the controller (30) determines whether the document data is to be accumulated in the job accumulating unit, and
when the document data is determined to be accumulated in the job accumulating unit and the password is determined as matching the identification information, the controller (30) requests the user to change the password.

10. The image forming apparatus (100) according to claim 3, further comprising:
a command additional unit (50) that adds a job command, protected by the password, to scanned data obtained by scanning a document, and
before the job is executed by the job execution unit (53) in accordance with the job command added by the command additional unit (50), the controller (30) requests the user to change the password when the password matches the identification information.

11. The image forming apparatus (100) according to claim 3, further comprising:
a password detection unit (30) that detects a password from scanned data obtained by scanning a document in which the password is embedded, wherein when the password is detected by the password detection unit, the password request unit (52) requests the user to enter the password; and
a command additional unit (50) that adds a job command to the scanned data when the setting information, received by the operation unit (20) in accordance with the password request unit (52), matches the password, wherein
when the password detected by the password detection unit matches the identification information, the controller (30) halts execution of the job and discards the scanned data.

12. The image forming apparatus (100) according to claim 1, wherein
the controller (30) compares the setting information with the identification information stored in the storage (40), and determines that the setting information matches the identification information when a match percentage between the setting information and the identification information is greater than or equal to a threshold.

13. The image forming apparatus (100) according to claim 1, wherein
the controller (30) compares the setting information with the identification information that is stored since the operation unit (20) is ready to receive the setting information until the operation unit (20) receives the setting information.

14. The image forming apparatus (100) according to claim 1, wherein
the controller (30) compares the setting information with the identification information that is stored while the setting information is being received by the operation unit (20).

15. The image forming apparatus (100) according to claim 1, wherein
when the user has no privilege to change the sensitive information, the controller (30) notifies a user who has the privilege of a request to change the setting information.

16. The image forming apparatus (100) according to claim 1, wherein
when the controller (30) requests the user to change the setting information and the setting information remains unchanged, the controller (30) forcibly changes the setting information to given information.

17. The image forming apparatus (100) according to claim 1, wherein
the controller (30) is capable of choosing, for each sensitive information, between requesting the user to change the setting information and forcibly changing the setting information.

18. The image forming apparatus (100) according to claim 1, wherein
the controller (30) is capable of collaborating with an entry-exit management system for a room in which the image forming apparatus (100) is installed, and the controller (30) requests the user to change the setting information when the controller (30) confirms presence of a person in the room, other than the user.

19. A method for setting an image forming apparatus (100),
the image forming apparatus (100) including:
an operation unit (20) that receives an operation through a user's action;
a voice input unit (10) that receives input of voice;
a voice identification unit (11) that identifies the voice received by the voice input unit (10);
a voice controller (12) that receives an operation through a user's voice, in accordance with identification information identified by the voice identification unit (11), the identification information being included in the voice;
a storage (40) that stores the identification information identified by the voice identification unit (11); and
a controller (30) that controls the image forming apparatus (100) in accordance with the operation received by the operation unit (20) or the voice controller (12),
the method comprising:
determining whether items to be set in the image forming apparatus (100) include a sensitive item which includes sensitive information;
determining whether setting information received by the operation unit (20) for the item that is determined to be the sensitive item, matches the identification information stored in the storage (40); and
requesting the user to change the setting information when the setting information matches the identification information.

20. A method for setting an image forming apparatus (100),
the image forming apparatus (100) including:
an operation unit (20) that receives an operation through a user's action;
a voice input unit (10) that receives input of voice;
a voice identification unit (11) that identifies the voice received by the voice input unit (10);
a voice controller (12) that receives an operation using a user's voice, in accordance with identification information identified by the voice identification unit (11), the identification information being included in the voice;
a storage (40) that stores the identification information identified by the voice identification unit (11); and
a controller (30) that controls the image forming apparatus (100) in accordance with the operation received by the operation unit (20) or the voice controller (12),
the method comprising:
determining whether items to be set in the image forming apparatus (100) include a sensitive item which includes sensitive information;
when the operation unit (20) receives setting information for the item determined to be the sensitive item, authenticating the setting information whether the setting information matches pre-set information of the sensitive item;
determining whether the authenticated setting information matches the identification information stored in the storage (40); and
requesting the user to change the setting information when the setting information matches the identification information.
